Europäisches Patentamt

(19) European Patent Office

Office européen des brevets

(11) EP 1 532 789 B1

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **03793585.5**

(22) Anmeldetag: **07.07.2003**

(51) Int Cl.:
*H04L 27/26* (2006.01)    *H04L 25/03* (2006.01)

(86) Internationale Anmeldenummer:
**PCT/DE2003/002263**

(87) Internationale Veröffentlichungsnummer:
**WO 2004/023752 (18.03.2004 Gazette 2004/12)**

(54) **VERFAHREN UND SENDEEINRICHTUNG ZUM ÜBERTRAGEN VON DATEN IN EINEM MEHRTRÄGERSYSTEM**

METHOD AND TRANSMISSION DEVICE FOR THE TRANSMISSION OF DATA IN A MULTI-CARRIER SYSTEM

PROCEDE ET DISPOSITIF D'EMISSION PERMETTANT LA TRANSMISSION DE DONNEES DANS UN SYSTEME A PORTEUSES MULTIPLES

(84) Benannte Vertragsstaaten:
**AT BE BG CH CY CZ DE DK EE ES FI FR GB GR HU IE IT LI LU MC NL PT RO SE SI SK TR**

(30) Priorität: **29.08.2002 DE 10239810**

(43) Veröffentlichungstag der Anmeldung:
**25.05.2005 Patentblatt 2005/21**

(73) Patentinhaber: **SIEMENS AKTIENGESELLSCHAFT**
**80333 München (DE)**

(72) Erfinder:
• **BOLINTH, Edgar**
  **41189 Mönchengladbach (DE)**
• **LORENZ, Gesa**
  **46535 Dinslaken (DE)**

(56) Entgegenhaltungen:
**DE-A- 10 129 317          US-A1- 2002 105 901**

• **SLIMANE S B: "OFDM schemes with non-overlapping time waveforms" VEHICULAR TECHNOLOGY CONFERENCE, 1998. VTC 98. 48TH IEEE OTTAWA, ONT., CANADA 18-21 MAY 1998, NEW YORK, NY, USA, IEEE, US, 18. Mai 1998 (1998-05-18), Seiten 2067-2071, XP010288176 ISBN: 0-7803-4320-4**
• **ARMSTRONG J: "Analysis of new and existing methods of reducing intercarrier interference due to carrier frequency offset in OFDM" IEEE TRANSACTIONS ON COMMUNICATIONS, IEEE INC. NEW YORK, US, Bd. 47, Nr. 3, März 1999 (1999-03), Seiten 365-369, XP002142839 ISSN: 0090-6778**
• **VAHLIN A ET AL: "OPTIMAL FINITE DURATION PULSES FOR OFDM" PROCEEDINGS OF THE GLOBAL TELECOMMUNICATIONS CONFERENCE (GLOBECOM). SAN FRANCISCO, NOV. 28 - DEC. 2, 1994, NEW YORK, IEEE, US, Bd. 1, 28. November 1994 (1994-11-28), Seiten 258-262, XP000488554 ISBN: 0-7803-1821-8**

**Beschreibung**

Die Erfindung betrifft ein Verfahren zum Übertragen von Daten in einem Mehrträgersystem nach dem Oberbegriff des Anspruchs 1 sowie eine Sendeeinrichtung zum Übertragen von Daten in einem Mehrträgersystem gemäß dem Anspruch 8.

Bei der orthogonalen Frequenzmultiplex -Technik OFDM, welches insbesondere in Funknetzwerken WLAN eingesetzt wird, beispielsweise nach dem IEEE 802.11 Standard funktionierenden sowie bei HiperLAN, handelt es sich um ein Verfahren, das gleichzeitig mehrere Trägerfrequenzen, auch vereinfachend mit Träger bezeichnet, für die Übertragung eines Digitalsignals benutzt, diese Trägerfrequenzen allerdings nur mit einer verringerten Übertragungsrate bezogen auf die insgesamt (über alle Träger) zur Verfügung stehende Übertragungsrate moduliert.

Zu diesem Zweck wird bei OFDM das zur Verfügung stehende Frequenzband in mehrere (Sub-)Trägerbänder unterteilt. Der Abstand der Trägerfrequenzen richtet sich nach den Übertragungsraten.

Ein OFDMA basiertes Zugriffsszenario in einem System mit einer Vielzahl von Nutzern (Multiple User System) basiert auf dem Ansatz jedem der Nutzer eigene OFDM-Subträger zu zuordnen.

In einem derartigen System entstehen unter realen Übertragungsbedingungen Übersprecheffekte zwischen des Subträgern auch ICI (Inter-Channel-Interferences) genannt.

Die ICI ergibt sich dabei sowohl infolge einer durch Bewegung mobiler Endgeräte entstehenden Dopplerverschiebung als auch infolge eines Oszillator-Phasenrauschens.

In einem OFDM System ist im sogenannten "Downlink", mit dem in der Mobilkommunikation im Allgemeinen die von einer Basisstation zu einer Mobilstation gehende Kommunikation bezeichnet wird, sowohl die Dopplerverschiebung als auch der üblicherweise im Empfänger korrigierte/kompensierte Teil des Oszillator-Phasenrauschens, der auch mit Common Phase Error (CPE) bezeichnet wird, für alle Trägerfrequenzen der Subträgerbänder gleich ist, so dass sich für diese Kommunikationsrichtung kein durch das OFDMA Prinzip hervorgerufenes Zugriffsproblem ergibt.

Aus der US 2002/0105901 A1 ist hierzu ein System und ein Verfahren bekannt, bei dem durch Formen der Signalwellen eine Manipulation des Spektrums eines OFDM Signals erzielt wird.

Aus Stamoulis et al: "Space-time block-coded OFDMA with linear precoding for multirate services", IEEE Transactions on Signal Processing, Jan. 2002, ist ein System bekannt, welches eine Multi-User Interferenz in einem OFDMA System eliminiert, offenbart.

Aus der EP 0 938 208 ist ein OFDM/TDMA System bekannt, mit einer Vielzahl von Nutzern, bei dem Subträger in Radbereichen eines Subträgerbandes nicht moduliert sind, um eine Interferenz auf angrenzenden Frequenzschlitzen zu eliminieren.

Im "Uplink", mit dem in der Mobilkommunikation im Allgemeinen die entgegengesetzte von einer Mobilstation zu einer Basisstation gehende Kommunikation bezeichnet wird, besteht hingegen das Problem, dass die Dopplerverschiebungen aufgrund der unterschiedlichen Relativgeschwindigkeiten der mobilen Teilnehmer nicht über alle Subträger konstant sind. Zudem ist das Phasenrauschen bzw. der korrigierbare Teil des Phasenrauschens für diese Kommunikationsrichtung in der Regel unkorreliert, da es überwiegend von den unsynchronisierten Oszillatoren, der einzelnen Teilnehmer (User) erzeugt wird.

Das sich aus der Dopplerverschiebung sowie dem Phasenrauschen bei dieser Kommunikationsrichtung ergebende Inter Channel Interference stellt daher in einem OFDMA basierten Uplink eine Limitierung der Übertragungseigenschaften dar, die bis hin zum vollkommenen Ausfall des Systems führen kann.

Die der Erfindung zugrundeliegende Aufgabe ist es, ein Verfahren sowie eine Anordnung anzugeben, welche einen im wesentlichen Störungsfreien OFDMA Zugriff im Uplink ermöglichen.

Diese Aufgabe wird ausgehend von dem Oberbegriff des Verfahrensanspruches 1 durch dessen kennzeichnenden Merkmale gelöst, sowie ausgehend vom Oberbegriff des Anordnungsanspruches 8 durch dessen kennzeichnende Merkmale gelöst.

Das erfindungsgemäße Verfahren hat den Vorteil, dass eine Reduzierung bis hin zur Eliminierung des ICI durch senderseitige Vorverzerrung des Sendesignals für einen Teil der Trägerfrequenzen des Subträgerbandes in Abhängigkeit von aktuellen Übertragungseigenschaften erzielt wird, da hierdurch die Beschränkungen der Übertragungseigenschaften in dieser Kommunikationsrichtung aufgehoben bzw. reduziert werden, wobei die Vorverzerrung jeweils alle oder nur jeweils die sich am Rande eines Frequenzbandes sich befindenden Subträger die einem Teilnehmer zugeordnet sind betrifft und infolgedessen den Vorteil hat, dass genau diejenigen Subträger eines Teilnehmers vorverzerrt werden, die signifikant zum ICI beitragen - unabhängig davon, ob Phasenrauschen oder Dopplerverschiebung der systemlimitierende Aspekt ist.

Vorzugsweise erfolgt die Vorverzerrung mit Hilfe einer Filterung durch ein Signalfilter, welches im Zeitbereich einer Fensterung und somit im Frequenzbereich einer Faltung entspricht und ist insbesondere dadurch gekennzeichnet, dass die gefilterten Subträger im wesentlichen steile Filterflanken aufweisen und somit signifikant zur ICI Unterdrückung beitragen. Zudem wird ein Empfänger, der in einem das erfindungsgemäße Verfahren einsetzenden System verwendet wird, hierfür nur geringfügig oder überhaupt nicht modifiziert werden. Durch Filterung der Subträger im Randbereich eines OFDM-Symbols kann außerdem das Guard-Band, d.h. die Anzahl der unbenutzten Subträger am Rand des OFDM-Symbols, verkleinert werden, so dass zusätzlich noch eine vergleichsweise höhere Datenrate erzielt wird.

Vorteilhaft ist es die Vorverzerrung derart durchzuführen, dass der Wert einer den verzerrten Trägerfrequenzen zugeordneten ersten Symboldauer gleich bleibt. Insbesondre ist die Zeitbereichsfensterung bzw. die Faltungsoperation im Frequenzbereich dadurch gekennzeichnet, dass die Länge des Zeitbereichsfensters $\omega_{(k)}$ insgesamt die OFDM-Symboldauer d.h. OFDM-Symbolnutzdauer und Dauer des zyklischen Präfixes nicht überschreitet und die erforderliche Flankensteilheit der Subträger im wesentlichen durch die Überabtastung determiniert ist.

Vorzugsweise ist die Länge der OFDM Nutzsymboldauer gleich der Länge des Zeitbereichsfensters $\omega_{(k)}$. Grundsätzlich existieren zwei verschiedene Ausführungen von Zeitbereichsfensterungen $\omega_{(k)}$ erstens Fenster die das Nyquist-Kriterium erfülle, wie beispielsweise das Root-Raised-Cosine-Fenster), d.h. dass trotz senderseitiger Fensterung bzw. Filterung der Empfänger, insbesondere bei idealem Kanal, in der Lage ist die gesendeten Daten fehlerfrei zu rekonstruieren und zweitens Fenster bzw. Filter die das Nyquist-Kriterium im oben genannten Sinne nicht erfüllen, jedoch im Gegenzug vergleichsweise steilere Filterflanken und somit eine vergleichsweise bessere ICI Unterdrückung ermöglichen, wie beispielsweise das Blackman-Fenster).

Die Anzahl der vorverzerrten Subträger kann auch grundsätzlich auf alle Subträger ausgeweitet werden, insbesondere dann wenn die Kombination von Dopplereffekt und Phasenrauschen der limitierende Faktor für das ICI ist.

Weitere vorteilhafte Ausgestaltungen sind in den Unteransprüchen angegeben.

Weitere Erläuterungen sowie Vorteile der Erfindung sind in der Beschreibung der Figuren 1 bis 3b wiedergegeben. Davon zeigen:

Figur 1              Senderseitige Modulation von OFDM-Symbolen gemäß dem Stand der Technik,

Figur 2              Senderseitige Modulation von OFDM-Symbolen nach dem erfindungsgemäßen Verfahren,

Figur 3a bis 3b    Diagramme einer Simulation mit einer beispielhaften Verzerrungsfunktion sowie einem beispielhaften Satz von Parametern.

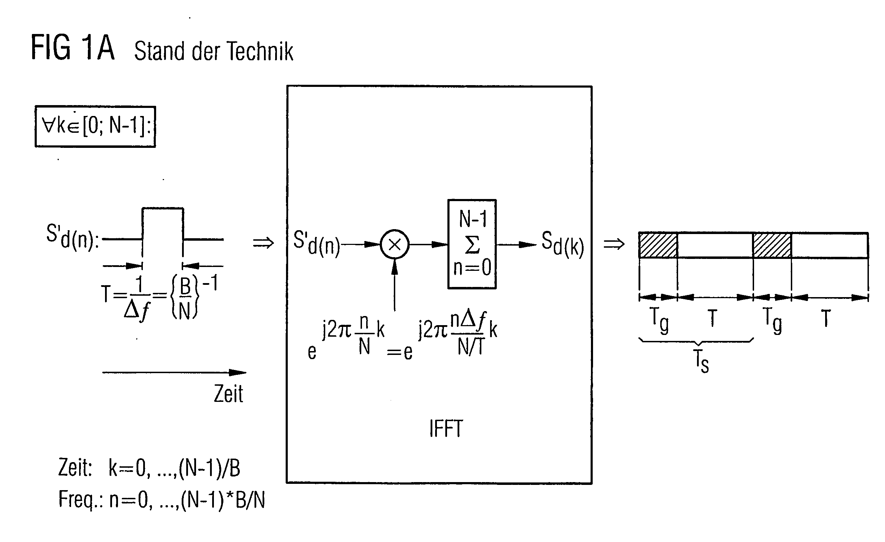

In Figur 1a ist schematisch das senderseitige Modulationsverfahren gemäß dem Stand der Technik bzw. die Struktur des dieses bekannte Verfahren durchführenden Senders dargestellt. Nach dem Stand der Technik wird jeder Symbolimpuls $S_{d(k)}$ eines k-ten Trägers $f_k$ aus N Subträgern eines Subträgerbandes der Bandbreite B moduliert, d.h. für jeden Symbolimpuls $S_{d(k)}$ wird für ein Zeitfenster der Länge T einer Inverse Fast Fourier Transformation (IFFT) gemäß der Formel

$$S_{d(k)} = \sum_{n=0}^{N-1} S_{d(n)} e^{j2\pi\frac{n}{N}k}$$

zugeführt und hieraus ein OFDM-Symbol $S_{d(k)}$ generiert. Um Echos und/oder Synchronisationsfehlern entgegenzuwirken, wird dieses OFDM-Symbol $S_{d(k)}$ mit der Dauer T, durch die auch Fensterlänge einer entsprechenden Fourier-Analyse im einem Empfänger bestimmt ist, im Allgemeinen mit einem Schutzintervall versehen, d.h. der Dauer T wird um eine, üblicherweise als Guardzeit bezeichnete, Zeitdauer $T_g$, verlängert, so dass sich in Summe für das zu sendende OFDM-Symbol $S_{d(k)}$ eine Symboldauer $T_s$ ergibt.

Dieses Modulationsverfahren wird gemäß dem Stand der Technik für alle Träger $f_k$ eines Subträgerbandes mit N Trägern durchgeführt.

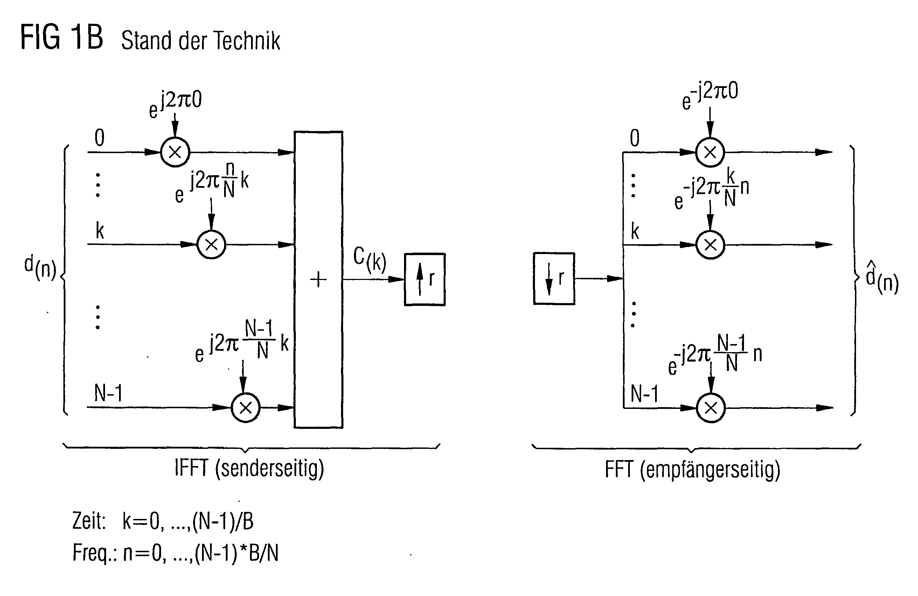

In Figur 1b ist die dem bekannten IFFT-Verfahren zugrundeliegende senderseitige Filterstruktur IFFT dargestellt, die sich gemäß der Formel

$$c_{(k)} = \frac{1}{N} \cdot \sum_{n=0}^{N-1} d_{(n)} \cdot e^{j2\pi\frac{n}{N}k}$$

ergibt. Die zur Umkehrung des IFFT-Verfahrens verwendete empfängerseitige Filterstruktur FFT ist durch die Formel

$$\hat{d}_{(n)} = \sum_{k=0}^{N-1} c_{(k)} \cdot e^{-j2\pi\frac{k}{N}n}$$

gekennzeichnet.

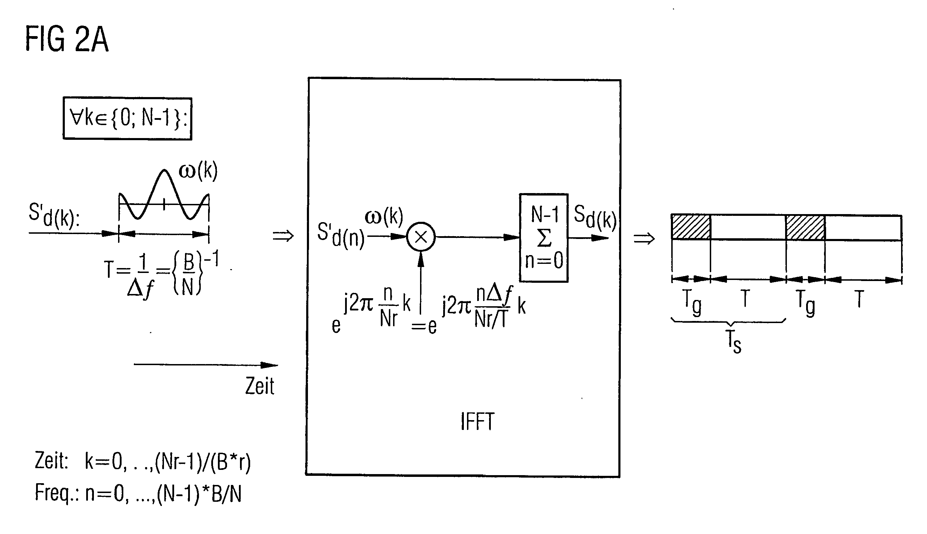

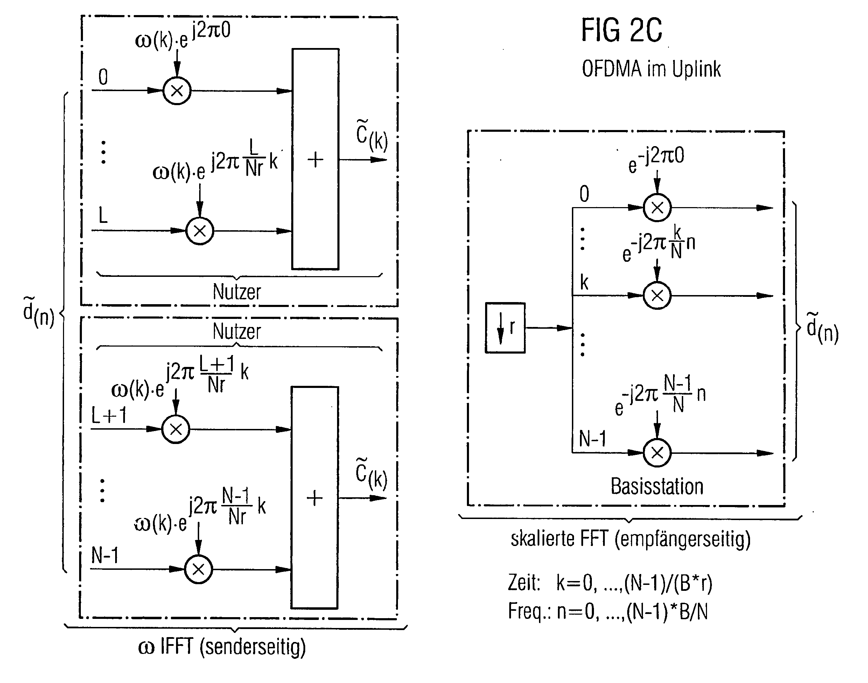

In Figur 2a ist schematisch das erfindungsgemäße Verfahren bzw. strukturell die wesentlichen Elemente eines das erfindungsgemäße Verfahren durchführenden Senders dargestellt. Im Gegensatz zur Verfahrensweise gemäß dem Stand der Technik, werden erfindungsgemäß - mit Ausnahme der derjenigen Träger $f_n$, die sich im Randbereich des Subträgerbandes befinden - alle auf den verbleibenden Trägern $f_n$ zugeordneten Symbolimpulse $S_{d(k)}$, d.h. alle Symbolimpulse $S_{d(k)}$ auf Trägern $f_n$ mit $k \in ]0;N\text{-}1[$, der in Figur 1 dargestellten IFFT gemäß dem Stand der Technik zugeführt, während die auf den Trägern $f_n$ im Randbereich des Subträgerbandes, d.h. die den Trägern $f_n$ mit $k \in \{0;Nr\text{-}1\}$, zugeordneten Symbolimpulse $S_{d(k)}$ einer Überabtastung mir der Rate r und einer Vorverzerrung unterworfen werden, wobei die Vorverzerrung derart erfolgt, dass der jeweilige Symbolimpuls $S_{d(k)}$ mit einer Verzerrungsfunktion gefenstert bzw. gefiltert wird, so dass die Vorverzerrungsfunktion $\omega_{(k)}$ den Frequenzgangs des vorverzerrten/gefilterten Subträgers bestimmt.

Abschließend werden alle Symbolimpulse $S_{d(k)}$ pro Teilnehmer (User) auf die jeweilige Subträgerfrequenz hochmoduliert und - wie im IFFT Verfahren gemäß Figur 2a üblich - aufsummiert.

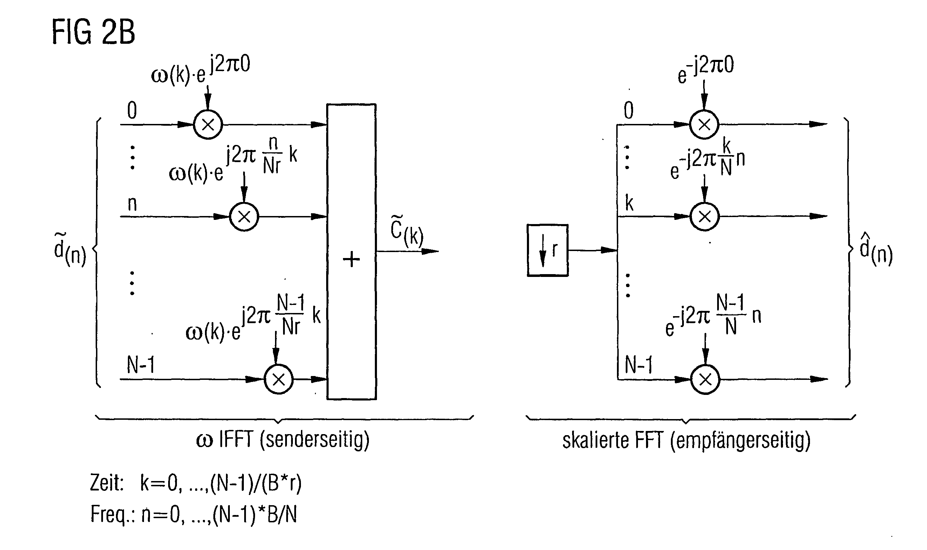

Dabei wird zur erfindungsgemäßen senderseitigen Vorverzerrung eine in Figur 2b dargestellte durch die Formel

$$\tilde{c}_{(k)} = \frac{1}{N} \cdot \sum_{n=0}^{N \cdot r - 1} \omega_{(k)} \cdot \tilde{d}_{(n)} \cdot e^{j2\pi\frac{n}{N \cdot r}k}$$

gekennzeichnete beispielhafte Filterstruktur ωIFFT eingesetzt, wobei die Vorverzerrung durch Verknüpfung mit einer Fensterfunktion ω(n) im Zeitbereich, wie beispielsweise einem "Blackman-Fenster" mit Überabtastung, erzielt wird. Diese Fensterfunktion ist beispielsweise durch

$$\omega_{(n)} = \underbrace{[\tilde{\omega}_{(n)},}_{\frac{N \cdot r}{8}} \underbrace{0 \dots 0,}_{\frac{N \cdot 3 \cdot r}{4}} \underbrace{\tilde{\omega}_{(n)}]}_{\frac{N \cdot r}{8}}$$

und

$$\tilde{\omega}_{(n)} = 0.42 - 0.5 \cdot \cos(2\pi \frac{n}{M-1}) + 0.08 \cdot \cos(4\pi \frac{n}{M-1})$$

beschrieben, wobei hier vorzugsweise

$$M = \frac{N \cdot r}{4}$$

gilt und r die Rate der Überabtastung ("Oversampling"-Rate) wiedergibt und wobei der Vektor $\tilde{d}_{(n)}$ sich aufgrund der Überabtastung in folgender Weise

$$\widetilde{d}_{(n)} = \begin{bmatrix} d_{(n)} \\ \vdots \\ d_{(n)} \\ 0 \\ \vdots \end{bmatrix} \begin{matrix} \Big\} \forall n = [0...N-1] \\ \\ \Big\} \forall n = [N...N\cdot r - 1] \end{matrix}$$

festgelegt ist.

Des Weiteren ist in Figur 2b eine zur Umkehrung der durch die erfindungsgemäße senderseitigen Filterstruktur ωIFFT vorverzerrtes IFFT vorgesehene empfängerseitige Filterstruktur skalierteFFT dargestellt und durch die Formel

$$\hat{d}_{(n)} = \sum_{k=0}^{N-1} \widetilde{c}_{(k)} \cdot e^{-j2\pi\frac{k}{N}n}$$

Beschrieben, welche in einem realen System im wesentlichen identisch ist einem Empfängerstruktur gemäß dem Stand der Technik (Figur 1).

Figur 2c zeigt eine erfindungsgemäße OFDMA Struktur im Uplink, wobei 2 verschiedene Teilnehmer - nämlich User A und User B - verschiedene Subträgerfrequenzbänder benutzen und wobei erfindungsgemäß vorzugsweise auf den benachbarten Subträgern L des ersten Teilnehmers (User A) und auf dem Subträger (L+1) des zweiten Teilnehmers (User B) besagte Vorverzerrung angewendet wird um die ICI in der Basisstation zu unterdrücken.

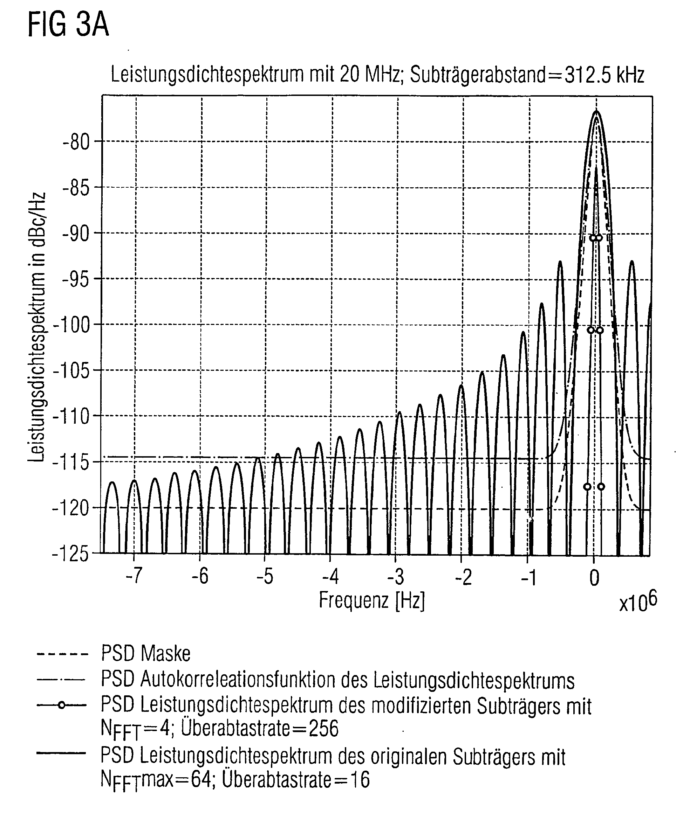

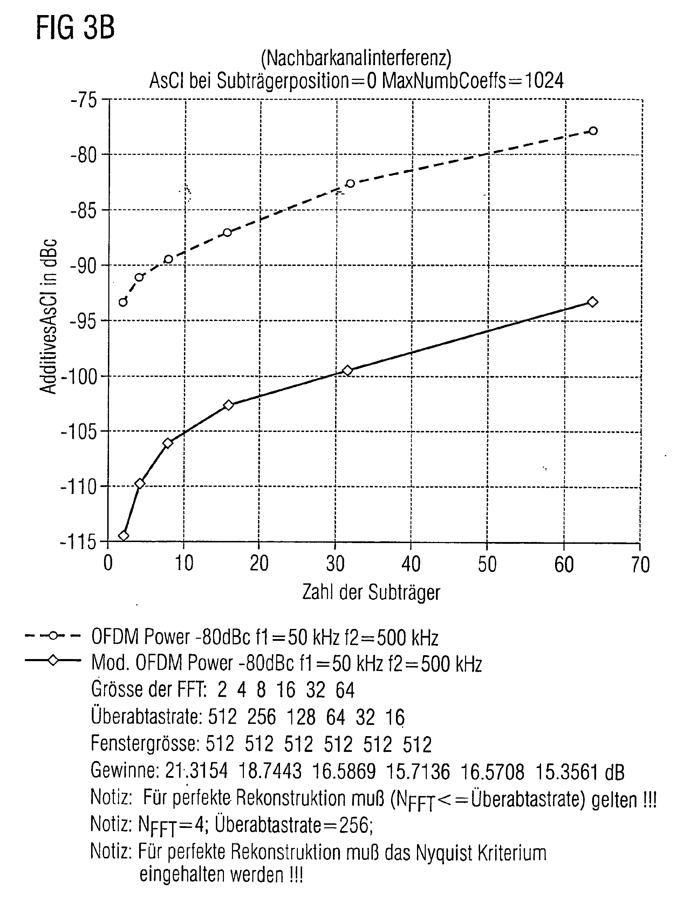

In den Figuren 3a und 3b sind zur Verdeutlichung die Ergebnisse einer Kalkulation mit oben genannten Formeln widergebende Diagramme mit folgenden Parametersätzen

| N = | 2 | 4 | 8 | 16 | 32 | 64 |
|-----|-----|-----|-----|-----|-----|-----|
| r = | 512 | 256 | 128 | 64 | 32 | 16 |
| M = | 512 | 512 | 512 | 512 | 512 | 512 |

dargestellt.

In Figur 3a ist das Leistungsdichtespektrum eines nicht idealen Oszillators, das kombinierte Leistungsdichtespektrum eines nicht idealen Sendeoszillators und eines nicht idealen Empfangsoszillators zu sehen die stellvertretend für eine zeit variante Störung, die ICI verursacht untersucht wurden. Darüber hinaus sind in Figur 3 ein Subträger gemäß dem Stand der Technik zu sehen (durchgezogene Linie) und ein erfindungsgemäß gefilterter Subträger (durchgezogene mit Kreisen markierte Linie) zu sehen. Zu erkennen ist hier schon dass bei einer Faltung im Frequenzbereich von Subträger und Leistungsdichtespektrum der Störung das resultierende Leistungsdichtespektrum viel weniger Energie außerhalb des jeweils zu einem Subträger zugeordneten Frequenzbandes aussendet und somit vergleichsweise weniger ICI erzeugt.

Figur 3b zeigt quantitativ wie viel ICI der mit einem Blackman-Fenster gefensterte Subträger vergleichsweise zu einem Subträger gemäß dem Stand der Technik erzeugt, wobei als Leistungsdichtespektrum der Störung das kombinierte Referenz-Leistungsdichtespektrum von Sende- und Empfangsoszillator gemäß Figur 3 benutzt wurde.

**Patentansprüche**

1. Verfahren zum Übertragen von Daten in einem Mehrträgersystem dem ein Frequenzband zugeordnet ist, dessen Trägerfrequenzen mindestens einem das Frequenzband unterteilenden Subträgerband zugeordnet sind, **dadurch gekennzeichnet, dass** senderseitig, in Abhängigkeit von aktuellen Übertragungseigenschaften, für einen Teil der Trägerfrequenzen des Subträgerbandes eine Vorverzerrung des Sendesignals derart adaptiv erfolgt, dass sie aktuell jeweils nur diesen Teil der Trägerfrequenzen des Subträgerbandes betrifft.

2. Verfahren nach Anspruch 1, **dadurch gekennzeichnet, dass** die Vorverzerrung durch eine Filterung und/oder Fensterung im Zeit- und/oder Frequenzbereich erfolgt.

**3.** Verfahren nach Anspruch 1 oder 2, **dadurch gekennzeichnet, dass** die Filterung durch ein Signalfilter, welches im Frequenzbereich im wesentlichen steile Filterflanken aufweist, erfolgt.

**4.** Verfahren nach einem der Ansprüche 1 bis 3, **dadurch gekennzeichnet, dass** zur Filterung und/oder Fensterung ein "Blackman-", "Bartel-", "Kaiser-", "Papoulis-" oder vergleichbare Fensterfunktionen, die derart ausgestaltet sind, dass die Fensterung im Zeitbereich durchgeführt wird und wobei vorzugsweise eine Überabtastung verwendet wird um im Frequenzbereich steile Filterflanken zu erzielen.

**5.** Verfahren nach einem der vorhergehenden Ansprüche, **dadurch gekennzeichnet, dass** das Mehrträgersystem in Kombination mit einem "FDMA" (Frequency Division Multiple Access), insbesondere dem "OFDMA"-Zugriffsverfahren (Orthogonal Fequency Division Multiple Access) eingesetzt wird.

**6.** Verfahren nach einem der Ansprüche 1 bis 5, **dadurch gekennzeichnet, dass** die Vorverzerrung auf sich in Randbereichen des Subträgerbandes, welches vorzugsweise mindestens einem Teilnehmer zugeordnet ist, insbesondere an weitere Subträgerbänder angrenzende, Trägerfrequenzen beschränkt wird.

**7.** Verfahren nach einem der vorhergehenden Ansprüche, **dadurch gekennzeichnet, dass** der Wert einer den verzerrten Trägerfrequenzen zugeordneten ersten Symboldauer gleich bleibt, wobei insbesondere bei der Zeitbereichsfensterung bzw. die Faltungsoperation im Frequenzbereich die Länge des Zeitbereichsfensters $\omega_{(k)}$ insgesamt die OFDM-Symboldauer d.h. OFDM-Symbolnutzdauer sowie die Dauer des zyklischen Präfixes nicht überschreitet und die erforderliche Flankensteilheit der Subträger im wesentlichen durch die Überabtastung determiniert wird.

**8.** Sendeeinrichtung zum Übertragen von Daten in einem Mehrträgersystem dem ein Frequenzband zugeordnet ist, dessen Trägerfrequenzen mindestens einem das Frequenzband unterteilenden Subträgerband zugeordnet sind, **gekennzeichnet durch**

a) Mittel zum Ermitteln aktueller Übertragungseigenschaften,
b) Mittel zur Vorverzerrung für einen Teil der Trägerfrequenzen des Subträgerbandes des Sendesignals, die derart adaptiv erfolgt, dass die Vorverzerrung aktuell jeweils nur diesen Teil der Trägerfrequenzen des Subträgerbandes betrifft.

**Claims**

**1.** Method for transmitting data in a multi-carrier system to which a frequency band is assigned, the carrier frequencies of which are assigned to at least one sub-carrier band dividing the frequency band, **characterised in that**, on the send side, depending on the current transmission characteristics, an adaptive pre-emphasis of the send signal is undertaken for a part of the carrier frequencies of the sub-carrier band, that it actually relates only to this part of the carrier frequencies of the sub-carrier band.

**2.** Method in accordance with claim 1, **characterised in that** pre-emphasis is undertaken by a filtering and/or a windowing in the time and/or frequency range.

**3.** Method in accordance with claim 1 or 2, **characterised in that** the filtering is undertaken by a signal filter, which exhibits essentially high filter rates of change in the frequency range.

**4.** Method in accordance with one of the claims 1 to 3, **characterised in that,** for filtering and/or windowing a "Blackman", "Bartel", "Kaiser", "Papoulis" or comparable window function is used which is embodied such that the windowing is executed in the time range and with an oversampling preferably being used to achieve high filter rates of change in the frequency range.

**5.** Method in accordance with one of the previous claims, **characterised in that** the multi-carrier system is used in combination with an "FDMA" (Frequency Division Multiple Access) method, especially the "OFDMA" (Orthogonal Frequency Division Multiple Access) method.

**6.** Method in accordance with one of the claims 1 to 5, **characterised in that** the pre-emphasis is limited to carrier frequencies in edge areas of the sub-carrier which is preferably assigned to one user, especially bordering on other sub-carrier bands.

**7.** Method in accordance with one of the previous claims, **characterised in that** value of a first symbol duration assigned to one of the emphasised carrier frequencies remains the same, with, especially with time range windowing or filtering or the folding operation in the frequency range, the overall length of the time range window $\omega_{(k)}$ not exceeding the OFDM symbol duration i.e. the OFDM useful symbol duration as well as the duration of the cyclic prefix and the necessary rate of change of the sub-carriers is essentially determined by the oversampling.

**8.** Transmit device for transmitting data in a multi-carrier system to which a frequency band is assigned, the carrier frequencies of which are assigned to at least one sub-carrier band subdividing the frequency band, **characterised by**

a) means for determining current transmission characteristics,
b) means for pre-emphasis of a part of the carrier frequencies of the sub-frequency band of the send signal, which is undertaken adaptively such that the pre-emphasis actually relates only to this part of the carrier frequencies of the sub-carrier band.

**Revendications**

**1.** Procédé de transmission de données dans un système à porteuses multiples, auquel est affectée une bande de fréquence dont les fréquences porteuses sont affectées à au moins une bande sous-porteuse divisant la bande de fréquence, **caractérisé en ce que**, côté émission, une prédistorsion du signal d'émission est effectuée pour une partie des fréquences porteuses de la bande sous-porteuse, en fonction de caractéristiques de transmission momentanées, de telle manière adaptative qu'elle concerne momentanément respectivement seulement cette partie des fréquences porteuses de la bande sous-porteuse.

**2.** Procédé selon la revendication 1, **caractérisé en ce que** la prédistorsion est réalisée au moyen d'un filtrage et/ou d'un fenêtrage dans la gamme de temps et/ou de fréquence.

**3.** Procédé selon la revendication 1 ou 2, **caractérisé en ce que** le filtrage est réalisé au moyen d'un filtre de signal lequel présente essentiellement des flancs de filtre raides dans la gamme de fréquence.

**4.** Procédé selon l'une quelconque des revendications 1 à 3, **caractérisé en ce qu'**une fonction de « Blackman », une fonction de « Bartel », une fonction de « Kaiser », une fonction de « Papoulis » ou des fonctions de fenêtre comparables sont utilisées pour le filtrage et/ou le fenêtrage, qui sont conçues de telle manière que le fenêtrage est réalisé dans la plage de temps, et un suréchantillonnage étant de préférence utilisé afin d'obtenir des flancs de filtre raides dans la gamme de fréquence.

**5.** Procédé selon l'une quelconque des revendications précédentes, **caractérisé en ce que** le système à porteuses multiples est utilisé en combinaison avec un procédé d'accès « FDMA » (Frequency Division Multiple Access), notamment un procédé d'accès « OFDMA » (Orthogonal Frequency Division Multiple Access).

**6.** Procédé selon l'une quelconque des revendications 1 à 5, **caractérisé en ce que** la prédistorsion est limitée à des fréquences porteuses se trouvant dans les parties de bord de la bande sous-porteuse, laquelle est affectée de préférence à au moins un abonné, notamment à des fréquences porteuses adjacentes à d'autres bandes sous-porteuses.

**7.** Procédé selon l'une quelconque des revendications précédentes, **caractérisé en ce que** la valeur d'une première durée de symbole affectée aux fréquences porteuses distordues reste constante, sachant que notamment lors du fenêtrage par plages de temps resp. lors de l'opération de convolution dans la gamme de fréquence, la longueur de la fenêtre de la plage de temps $\omega_{(k)}$ ne dépasse pas en tout la durée de symbole OFDM, c'est-à-dire la durée utile de symbole OFDM ainsi que la durée du préfixe cyclique, et **en ce que** la pente de flanc des sous-porteuses est déterminée essentiellement au moyen du suréchantillonnage.

**8.** Dispositif d'émission pour la transmission de données dans un système à porteuses multiples, auquel est affecté une bande de fréquence dont les fréquences porteuses sont affectées à au moins une bande sous-porteuse divisant la bande de fréquence, **caractérisé par**

a) des moyens pour déterminer des caractéristiques momentanées de transmission,
b) des moyens pour la prédistorsion pour une partie des fréquences porteuses de la bande sous-porteuse du signal d'émission, qui est réalisée de telle manière adaptative que la prédistorsion ne concerne momentanément que cette partie des fréquences porteuses de la bande sous-porteuse.

FIG 1A  Stand der Technik

$\forall k \in [0; N-1]:$

$S'_{d(n)}:$

$T = \dfrac{1}{\Delta f} = \left\{\dfrac{B}{N}\right\}^{-1}$

Zeit

$S'_{d(n)}$ ⊗ $\displaystyle\sum_{n=0}^{N-1}$ $S_{d(k)}$

$e^{j2\pi\frac{n}{N}k} = e^{j2\pi\frac{n\Delta f}{N/T}k}$

IFFT

Zeit:  k=0, ...,(N-1)/B
Freq.: n=0, ...,(N-1)*B/N

$T_g$  T  $T_g$  T

$T_S$

EP 1 532 789 B1

## FIG 1B  Stand der Technik

$e^{j2\pi 0}$

$e^{j2\pi\frac{n}{N}k}$

$e^{j2\pi\frac{N-1}{N}k}$

$d(n)$

$C_{(k)}$

IFFT (senderseitig)

$e^{-j2\pi 0}$

$e^{-j2\pi\frac{k}{N}n}$

$e^{-j2\pi\frac{N-1}{N}n}$

$\hat{d}(n)$

FFT (empfängerseitig)

Zeit:  $k=0, ...,(N-1)/B$

Freq.: $n=0, ...,(N-1)*B/N$

EP 1 532 789 B1

FIG 2A

$\forall k \in \{0; N-1\}:$

$\omega(k)$

$S'_d(k):$

$T = \dfrac{1}{\Delta f} = \left\{\dfrac{B}{N}\right\}^{-1}$

Zeit

$S'_d(n) \xrightarrow{\omega(k)} \otimes \rightarrow \begin{array}{c} N-1 \\ \Sigma \\ n=0 \end{array} \xrightarrow{S_d(k)}$

$e^{j2\pi \frac{n}{Nr} k} = e^{j2\pi \frac{n\Delta f}{Nr/T} k}$

IFFT

$T_g \quad T \quad T_g \quad T$

$T_S$

Zeit: $k = 0, .., (Nr-1)/(B*r)$

Freq.: $n = 0, ..., (N-1)*B/N$

EP 1 532 789 B1

# FIG 2B

$$\omega(k) \cdot e^{j2\pi 0}$$

$$\omega(k) \cdot e^{j2\pi \frac{n}{Nr} k}$$

$$\omega(k) \cdot e^{j2\pi \frac{N-1}{Nr} k}$$

$\widetilde{d}(n)$    0    n    N-1    $\widetilde{C}(k)$

$\omega$ IFFT (senderseitig)

$$e^{-j2\pi 0}$$

$$e^{-j2\pi \frac{k}{N} n}$$

$$e^{-j2\pi \frac{N-1}{N} n}$$

$\downarrow r$    0    k    N-1    $\hat{d}(n)$

skalierte FFT (empfängerseitig)

Zeit: $k = 0, \dots, (N-1)/(B*r)$

Freq.: $n = 0, \dots, (N-1)*B/N$

EP 1 532 789 B1

FIG 2C
OFDMA im Uplink

# FIG 3A

Leistungsdichtespektrum mit 20 MHz; Subträgerabstand=312.5 kHz

----- PSD Maske

—·— PSD Autokorreleationsfunktion des Leistungsdichtespektrums

—o— PSD Leistungsdichtespektrum des modifizierten Subträgers mit
$N_{FFT}=4$; Überabtastrate=256

—— PSD Leistungsdichtespektrum des originalen Subträgers mit
$N_{FFT}max=64$; Überabtastrate=16

# FIG 3B

**(Nachbarkanalinterferenz)**
**AsCI bei Subträgerposition=0 MaxNumbCoeffs=1024**

Zahl der Subträger

- - ○ - - OFDM Power -80dBc f1=50 kHz f2=500 kHz
—◇— Mod. OFDM Power -80dBc f1=50 kHz f2=500 kHz
Grösse der FFT: 2  4  8  16  32  64
Überabtastrate: 512  256  128  64  32  16
Fenstergrösse: 512  512  512  512  512  512
Gewinne: 21.3154  18.7443  16.5869  15.7136  16.5708  15.3561 dB
Notiz: Für perfekte Rekonstruktion muß ($N_{FFT}<=$Überabtastrate) gelten !!!
Notiz: $N_{FFT}=4$; Überabtastrate=256;
Notiz: Für perfekte Rekonstruktion muß das Nyquist Kriterium
        eingehalten werden !!!